# EUROPEAN PATENT SPECIFICATION

(11) **EP 3 130 030 B1**
(45) Date of publication and mention of the grant of the patent: **02.06.2021**
(21) Application number: 15772360.2
(22) Date of filing: 31.03.2015
(51) Int. Cl.: H01M 10/60, C09K 5/00

(54) **NON-AQUEOUS HEAT TRANSFER FLUID WITH REDUCED LOW TEMPERATURE VISCOSITY**
WASSERFREIE WÄRMEÜBERTRAGUNGSFLÜSSIGKEIT MIT VERRINGERTER NIEDRIGTEMPERATURVISKOSITÄT
FLUIDE DE TRANSFERT DE CHALEUR NON AQUEUX PRÉSENTANT UNE VISCOSITÉ RÉDUITE À BASSE TEMPÉRATURE

(30) Priority: 02.04.2014 US 201461973971 P
(43) Date of publication of application: 15.02.2017
(73) Proprietor: Evans Cooling Systems, Inc., Suffield, CT 06078 (US)
(72) Inventor: LIGHT, J. Thomas, Lakeville, CT 06039 (US)
(74) Representative: Patentanwälte Bauer Vorberg Kayser
(86) International application number: PCT/US2015/023654
(87) International publication number: WO 2015/153652

(56) References cited:
- WO-A1-2014/039284
- CA-A- 1 150 044
- US-A- 4 759 864
- US-A- 4 946 616
- US-A- 5 242 621
- US-A1- 2002 030 177
- US-A1- 2002 030 177
- US-A1- 2007 034 825
- US-A1- 2009 294 102
- US-A1- 2010 006 796
- US-A1- 2014 070 134
- US-B1- 6 203 719
- KIYOSHI TAKEDA ET AL: "Calorimetric study of ethylene glycol and 1,3-propanediol: configurational entropy in supercooled polyalcohols", JOURNAL OF MOLECULAR STRUCTURE., vol. 479, no. 2-3, 1 April 1999 (1999-04-01), pages 227-235, XP055419283, NL ISSN: 0022-2860, DOI: 10.1016/S0022-2860(98)00873-4

## Description

### Field of the invention

The present invention is directed generally to non-aqueous heat transfer fluids comprised primarily of ethylene glycol (EG), a glycol that exhibits supercooling. The fluids are further comprised of more other glycols that also exhibit supercooling. The heat transfer fluid may be used in internal combustion engines as an engine coolant. By combining certain glycols that also exhibit supercooling with the EG, the low temperature operating limit (LTOL) of the heat transfer fluid is lowered, thereby expanding the operating range of the fluid in cold environments, while avoiding the high viscosities from combinations using 1,2 propanediol (PG) for the same purpose.

### Background

A non-aqueous heat transfer fluid is a heat transfer fluid formulated and used without any added water. The heat transfer fluid may contain some small, incidental amount of water as a trace impurity, typically below one percent by weight. Corrosion inhibitors for non-aqueous heat transfer fluids do not require water in order for them to dissolve. By contrast, an aqueous, water-glycol heat transfer fluid typically comprises water, one or more polyhydric alcohol freezing point depressants, and may contain one or more corrosion inhibitors or buffers that require water for them to dissolve.

Water in its liquid state has excellent heat transfer characteristics. Even when the water is combined with a polyhydric alcohol freezing point depressant, such as EG, the heat capacity and thermal conductivity of the resulting aqueous heat transfer fluid remain preferable for heat transfer applications as long as the fluid is maintained in its liquid state. The challenge for a water-glycol heat transfer fluid is keeping it in its liquid state at all times, under the high heat density conditions of modern engines and their Exhaust Gas Recirculation (EGR) coolers. Water-glycol heat transfer fluids are operated close to their boiling points and water vapor from localized boiling is not always surrounded by liquid fluid cold enough to condense the water vapor. Water vapor does not transfer heat well. A coolant that is 50% water together with 50% ethylene glycol has a thermal conductivity of about 0.42 W/m·K in its liquid state, while water vapor, liberated by localized boiling, has a thermal conductivity of just 0.024 W/m·K, a 94% decrease. When water vapor displaces liquid coolant from hot engine metal, hot spots can develop that result in pre-ignition, detonation, and possible engine damage.

Non-aqueous heat transfer fluids have atmospheric boiling points that are far hotter than the temperatures at which they are typically controlled. Localized boiling can still produce vapor but the vapor condenses immediately into colder surrounding liquid coolant, avoiding the pocketing of vapor and displacement of liquid coolant. Use of a high boiling point non-aqueous coolant, by preventing the accumulation of vapor, keeps liquid in contact with hot metal at all times, giving improved heat transfer, as compared to coolants that contain water under conditions when water vapor is present.

Among the most common glycols that might comprise a non-aqueous coolant, EG stands out as having the highest thermal conductivity and lowest viscosity, both extremely important for a good non-aqueous heat transfer fluid. The downside of anhydrous EG is that it exhibits a supercooling range that initiates solidification at an easily-reached low temperature. Once solidified, it remains solidified until it is heated to a higher temperature, its published freezing point.

The freezing point of a glycol that exhibits supercooling is a temperature well above the temperature where solidification from low temperatures initiates. The supercooling temperature range of a glycol that exhibits supercooling is a freezing range; it begins to freeze at a lower temperature and remains frozen to a higher temperature. The freezing point of a glycol that exhibits supercooling is actually the melting point of the solidified mass after it freezes. The published freezing point for EG is -13°C, a temperature well above the temperature that is required to be reached in order to initiate freezing (-22°C). The LTOL of an anhydrous glycol that exhibits supercooling is a temperature just above the onset of freezing symptoms. If the LTOL is never reached, operation within the supercooling range is stable, without nodules, crystals or solidification. The LTOL for EG at -21°C (8°C colder than its -13°C freezing point) can be easily breached if the EG is exposed to common wintertime weather in many parts of the world US4946616A discloses coolant compositions comprising i.a. about 80% of EG and 10% of DEG.

United States Patent No. 8,394,287 (the '287 patent) describes the use of propylene glycol (PG or 1,2 propanediol), as a means to reduce the toxicity of EG, but also as a means to lower the temperature at which the freezing of EG is initiated. PG, unique among glycols, does not exhibit a supercooling range, despite certain industry literature stating to the contrary. PG simply gets thicker and thicker to at least -65°C, where it is "rubbery", rather than solid in a crystalline sense. Taken to the lower temperature of -86°C, PG is solid but still exhibits no nodules or crystals. As such, PG does not have an LTOL based upon a temperature at which freezing occurs, but is technically limited only by its low-temperature viscosity. (The temperature of -60°C for PG is variously reported as the freezing point or the temperature below which it "sets to glass". Another source reports -57°C as PG's pour point.). The addition of PG to EG effectively lowers the LTOL of EG to temperatures far colder than the -21 °C LTOL for EG. The use of PG to lower the freezing point of EG as in the '287 patent, however, comes with the penalty of increased viscosity of the heat transfer fluid, as PG is extremely viscous at low temperatures.

At -40°C, EG, by itself, is of course frozen solid. PG at -40°C is highly viscous, having a viscosity of 21,600 mPa·s. Mixtures of EG and PG are viscosity-tempered to a large extent because EG is the glycol that exhibits the lowest viscosity. A non-aqueous EG/PG coolant mixture, comprised of 13.5% PG and 86.5% EG can tolerate -40°C without solidifying and the mixture has a viscosity of about 2,500 mPa·s. It would be advantageous to lower the viscosity of non-aqueous EG-based heat transfer fluids further.

It would be desirable to find one or more glycols that could be added to ethylene glycol that would have at least the same capacity as PG to lower the LTOL of a non-aqueous ethylene glycol-based heat transfer fluid, and that contributed a lower increase in viscosity at lower temperatures, than results from the addition of PG to a non-aqueous ethylene glycol based heat transfer fluid.

### Summary of the Invention

The current invention is directed to a non-aqueous heat transfer fluid comprising EG combined with 1,3 propanediol ("PDO") and diethylene glycol ("DEG"). EG, PDO and DEG, all exhibit supercooling ranges. The published freezing points for EG, PDO, and DEG are -13°C, -24°C, and -9°C, respectively. These are the temperatures at which these glycols melt after they have undergone solidification at lower temperatures. The onset of freezing symptoms for EG, PDO, and DEG are -22°C, -45°C, and -36°C, respectively. Table 1 shows the LTOL and the supercooling range for each of these glycols.

EG has the lowest viscosity of all glycols and the greatest thermal conductivity of all glycols. It has a supercooling range that prevents it from being used as a non-aqueous heat transfer fluid in most climates because it solidifies at -22°C. This invention combines EG with minor amounts of PDO and DEG, both of which exhibit supercooling ranges, with the surprising result that the combination retains nearly all of EG's viscosity and thermal conductivity features, while giving the fluid a substantially improved LTOL, such as -40°C. The resulting viscosity by this technology, at any given LTOL, is significantly less than the viscosity from using an EG/PG mixture for the same purpose. The non-aqueous heat transfer fluid contains suitable hybrid additives for the inhibition of corrosion.

The invention is specifically directed to an ethylene glycol-based non-aqueous engine coolant for internal combustion engines comprising ethylene glycol (EG), 1,3 propanediol (PDO), and diethylene glycol (DEG), wherein the ratio of the mass of the PDO to the total mass of EG, PDO and DEG is 0.025 to 0.4, the ratio of the mass of the DEG to the total mass of EG, PDO and DEG is 0.025 to 0.4, the ratio of the total mass of PDO and DEG to the total mass of EG, PDO and DEG is 0.05 to 0.5 and the ratio of the mass of the EG to the total mass of EG, PDO and DEG is 0.5 to 0.95, and wherein the non-aqueous engine coolant contains less than 1.0% water by mass.

Furthermore, the invention is directed to a method for producing an ethylene glycol based non-aqueous engine coolant for internal combustion engines, comprising the step of combining ethylene glycol (EG) with 1,3-propanediol (PDO), and diethylene glycol (DEG), wherein the ratio of the mass of the PDO to the total mass of EG, PDO and DEG is 0.025 to 0.4, the ratio of the mass of the DEG to the total mass of EG, PDO and DEG is 0.025 to 0.4, the ratio of the total mass of PDO and DEG to the total mass of EG, PDO and DEG is 0.05 to 0.5 and the ratio of the mass of the EG to the total mass of EG, PDO and DEG is 0.5 to 0.95, and wherein the non-aqueous engine coolant contains less than 1.0% water by mass.

### Brief Description of the Figures

Fig. 1 is a chart that shows the general temperature profile of a glycol that exhibits supercooling.
Fig. 2 is a chart that shows the temperature profile of EG at temperatures below 0°C.
Fig. 3 is a chart showing the temperature profile of PG at temperatures below 0°C.
Fig. 4 is a chart showing the temperature profile of PDO at temperatures below 0°C.
Fig. 5 is a chart showing the temperature profile of DEG at temperatures below 0°C.
Fig. 6 is a chart showing the temperature profile of a heat transfer fluid comprising EG and PG with a PG to (EG+PG) mass ratio of 0.135 at temperatures below 0°C
Fig. 7 is a chart showing the temperature profile of a heat transfer fluid comprising EG and PDO with a PDO to (EG+PDO) mass ratio of 0.14 at temperatures below 0°C.
Fig. 8 is a chart showing the temperature profile of a heat transfer fluid comprising EG and PDO with a PDO to (EG+PDO) mass ratio of 0.275 at temperatures below 0°C.
Fig. 9 is a chart showing the temperature profile of a heat transfer fluid comprising EG and PDO with a PDO to (EG+PDO) mass ratio of 0.40 at temperatures below 0°C.
Fig. 10 is a chart showing the temperature profile of a heat transfer fluid comprising EG and DEG with a DEG to (EG+DEG) mass ratio of 0.22 at temperatures below 0°C.
Fig. 11 is a chart showing the temperature profile of a heat transfer fluid comprising EG and DEG with a DEG to (EG+DEG) mass ratio of 0.30 at temperatures below 0°C.
Fig. 12 is a chart showing the temperature profile of a heat transfer fluid comprising EG and DEG with a DEG to (EG+PDO) mass ratio of 0.40 at temperatures below 0°C.
Fig. 13 is a chart showing the temperature profile of a heat transfer fluid comprising EG, PDO and DEG with a PDO to (EG+PDO+DEG) mass ratio of 0.06 and with a DEG to (EG+PDO+DEG) mass ratio of 0.10 at temperatures below 0°C.
Fig. 14 is a chart showing the temperature profile of a heat transfer fluid comprising EG, PDO and DEG with a PDO to (EG+PDO+DEG) mass ratio of 0.12 and with a DEG to (EG+PDO+DEG) mass ratio of 0.155 at temperatures below 0°C.
Fig. 15 is a chart showing the temperature profile of a heat transfer fluid comprising EG, PDO and DEG with a PDO to (EG+PDO+DEG) mass ratio of 0.20 and with a DEG to (EG+PDO+DEG) mass ratio of 0.20 at temperatures below 0°C.

### Description of the Invention

The present invention is directed to a non-aqueous heat transfer fluid comprising EG combined with PDO and DEG. When a sufficient amount of PDO and DEG is combined with EG, the LTOL of the resulting heat transfer fluid can be reduced to any temperature desired below EG's LTOL, thereby extending the operating range of the non-aqueous heat transfer fluid.

The non-aqueous heat transfer fluid begins with anhydrous EG because EG (1) has the highest thermal conductivity of all the alkylene glycols and (2) has the lowest viscosity of all the alkylene glycols. A significant disadvantage of the use of EG in a non-aqueous heat transfer fluid is that it freezes at temperatures easily encountered in cold climates.

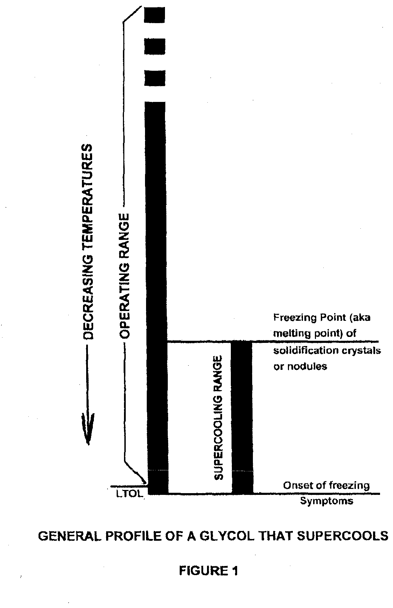

Most anhydrous glycols, including EG, DEG, and PDO, have a supercooling range that is shown generally in Fig. 1. Glycols that have a supercooling range do not exhibit any of the physical characteristics of freezing, such as formation of solid crystals or nodules, until the fluid reaches a temperature well below the temperature where crystals or nodules will melt back into a liquid form. One could say that the supercooling temperature range of a glycol that exhibits supercooling, is a freezing range; it begins to freeze at a lower temperature and remains frozen to a higher temperature. The "freezing point" of a glycol that exhibits supercooling is actually the melting point of the solidified mass after it freezes. Indeed, the temperature often referred to as the "freezing point" is usually determined using an apparatus that measures the melting point of solid material. The LTOL of an anhydrous glycol that exhibits supercooling is the temperature just above the onset of freezing symptoms. If the LTOL is never violated, operation within the supercooling range is stable, without nodules or solidification.

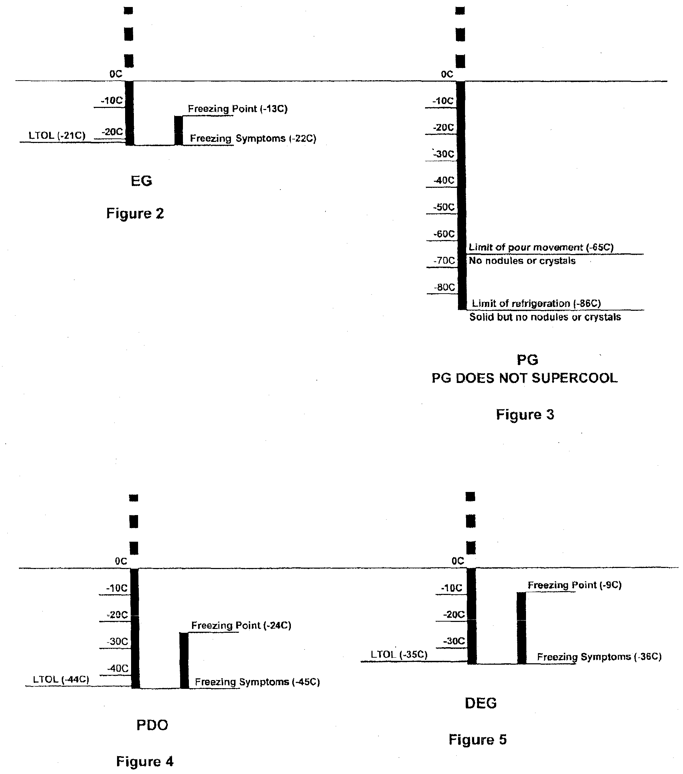

As shown in Fig. 2, EG has a freezing point of -13°C and a supercooling range that extends from -22°C to -13°C. The LTOL of EG is about -21°C, i.e. about one degree warmer than -22°C, the temperature at which freezing symptoms initiate.

Fig. 3 shows that PG does not exhibit a supercooling range and in fact does not form nodules or crystals that would indicate a freezing condition. In an actual test at -65°C, PG exhibited no symptoms of freezing, was a clear but very thick liquid, and would flow, albeit very slowly. Taking the temperature down to -86°C, the limit of the testing equipment, the PG was solid, but not crystalline. Reheating did not produce a melting but rather a viscosity reduction. In the prior art, PG added to EG produced a lower LTOL, depending upon the amount of PG added. The disadvantage of using PG for that purpose is the excessive viscosity of the resulting heat transfer fluid at low temperatures. The viscosity of neat PG, tested at -40°C, was found to be 21,600 mPa·s. The viscosity of neat PDO, tested at the same temperature, was just 3480 mPa·s. (The viscosity of neat DEG cannot be ascertained at -40°C because it solidifies at -36°C.)

Fig. 4 for PDO shows a very different characteristic from that of PG (Fig. 3). As shown in Fig. 4, PDO has a freezing point of -24°C and a supercooling range that extends from -45°C to -24°C. The LTOL of PDO is -44°C, i.e. about one degree warmer than -45°C, the temperature at which freezing symptoms initiate.

Fig. 5 for DEG shows distinctive differences from both EG (Fig. 2) and PDO (Fig. 4), all of which exhibit supercooling ranges. As shown in figure 5, DEG has a freezing point of -9°C and a supercooling range that extends from -36°C to -9°C. The LTOL of DEG is -35°C, i.e. about one degree warmer than -36°C, the temperature at which freezing symptoms initiate.

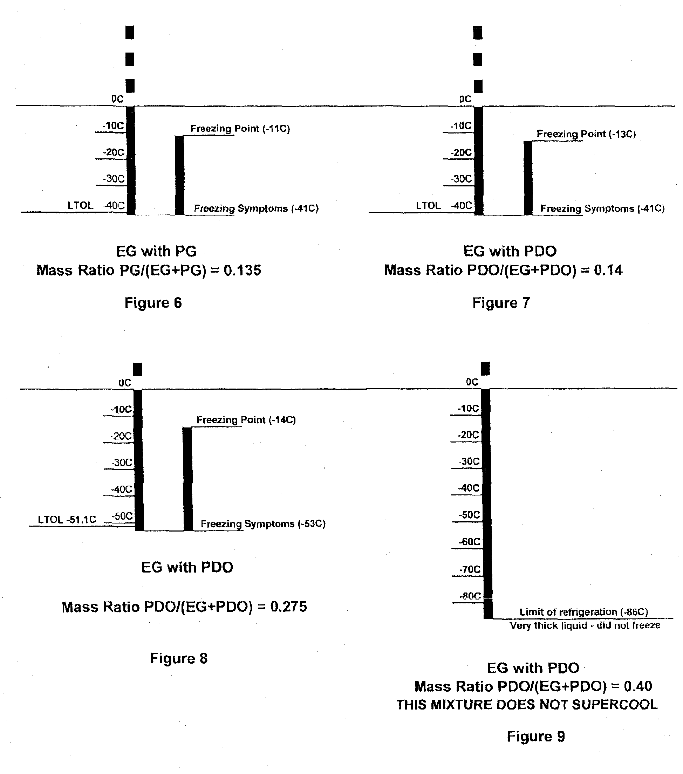

Fig. 6 shows the effect of combining EG, which exhibits supercooling, with PG, which does not, at a PG to (EG+PG) mass ratio of 0.135. The resulting heat transfer fluid exhibits supercooling and has an LTOL of -40°C. The viscosity of the heat transfer fluid is 2540 mPa·s at -40°C.

In a surprising discovery, the inventor found that the LTOL of EG can be extended to much colder temperatures by the addition of PDO, which itself exhibits supercooling. Fig. 7 shows the effect of combining EG and PDO at a PDO to (EG+PDO) mass ratio of 0.14. The resulting heat transfer fluid exhibits supercooling and has an LTOL of -40°C. The viscosity of the EG/PDO mixture at -40°C tested at 1950 mPa-s compared to 2540 mPa-s using PG in a similar concentration, a 23% reduction in viscosity. The lower viscosity of the EG/PDO mixture is advantageous for using the fluid in heat transfer applications, particularly in cold climates.

Higher PDO to (EG+PDO) mass ratios (in the range toward about 0.50) produce progressively lower LTOL values. Fig. 8 shows an LTOL of -51.1°C by increasing the PDO to (EG+PDO) mass ratio to 0.275. The LTOL of -51.1°C (-60°F) is an appropriate LTOL for a coolant blended for use in Arctic regions.

A further increase in the PDO to (EG+PDO) mass ratios to 0.40 and beyond produced another unexpected result: PDO/EG combinations in this range have no freezing symptoms and do not change from liquid to solid at temperatures as cold as -86°C (the limit of the test apparatus). In other words, a mixture of EG and PDO, having a 0.40 mass ratio of PDO to (EG+PDO), does not supercool. Fig. 9 for a PDO to (EG+PDO) mass ratio of 0.40 looks like Fig. 3 for neat PG, except that the EG/PDO combination continued to pour, albeit very slowly, all the way down to -86°C. Useful PDO to (EG+PDO) mass ratios are in the range of about 0.05 and about 0.50.

In a surprising discovery, the inventor found that the LTOL of EG can also be extended to much colder temperatures by the addition of DEG, which itself exhibits supercooling. Fig. 10 shows the effect of combining EG and DEG at a DEG to (EG+DEG) mass ratio of 0.22. The resulting heat transfer fluid exhibits supercooling and has an LTOL of -40°C. The viscosity of an EG based heat transfer fluid with an LTOL capability of -40°C tested at 2135 mPa-s using DEG compared to 2540 mPa-s using PG, a 15.9 percent reduction in viscosity. The lower viscosity of the EG/DEG mixture, while not as dramatic as in the EG/PDO case, is advantageous for using the fluid in heat transfer applications, particularly in cold climates.

Higher DEG to (EG+DEG) mass ratios produce progressively lower LTOL values. Fig. 11 shows an LTOL of -51.1°C by increasing the DEG to (EG+DEG) mass ratio to 0.30. The LTOL of -51.1°C (-60°F) is an appropriate LTOL for a coolant blended for use in Arctic regions.

Higher DEG to (EG+DEG) mass ratios in the range of 0.30 to about 0.50 produce progressively lower LTOL values. A DEG to (EG+DEG) mass ratio of 0.40 produced another unexpected result: A DEG/EG combination of this mass ratio has no freezing symptoms and does not change from liquid to solid at temperatures as cold as -86°C, showing that it does not supercool. Fig. 12 for a DEG to (EG+DEG) mass ratio of 0.40 looks the same as Fig. 9 that shows a PDO to (EG+PDO) mass ratio of 0.40. Useful DEG to (EG+DEG) mass ratios are in the range of about 0.05 to about 0.50.

In a surprising discovery, the inventor found that the LTOL of EG can also be extended to much colder temperatures by the addition of both PDO and DEG, both of which exhibit supercooling. Fig. 13 shows the effect of combining EG, PDO and DEG at a PDO to (EG+PDO+DEG) mass ratio of 0.06 and a DEG to (EG+PDO+DEG) mass ratio of 0.10. The resulting heat transfer fluid exhibits supercooling and has an LTOL of -40°C.

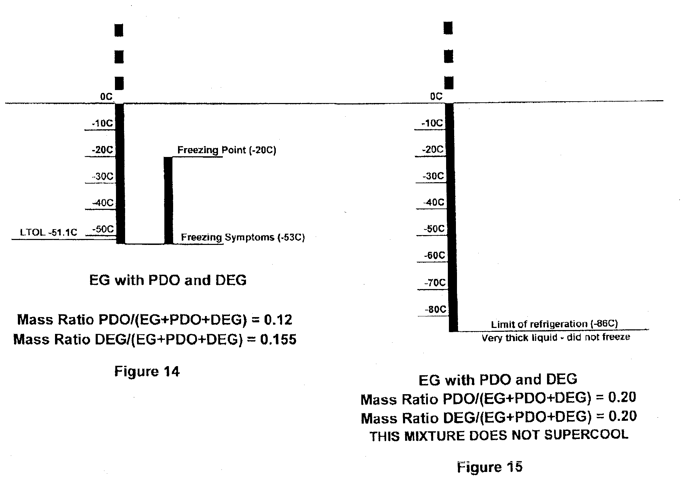

Greater PDO to (EG+PDO+DEG) and DEG to (EG+PDO+DEG) mass ratios produce progressively lower LTOL values. Fig. 14 shows an LTOL of -51.1°C achieved by increasing the PDO to (EG+PDO+DEG) mass ratio to 0.12 and increasing the DEG to (EG+PDO+DEG) mass ratio to 0.155.

Higher PDO to (EG+PDO+DEG) and DEG to (EG+PDO+DEG) mass ratios produce progressively lower LTOL values. A PDO to (EG+PDO+DEG) mass ratio of 0.20, together with a DEG to (EG+PDO+DEG) mass ratios of 0.20 produced yet another unexpected result: A PDO/DEG/EG combination of these mass ratios has no freezing symptoms and does not change from liquid to solid at temperatures as cold as -86°C and shows that it does not supercool. Fig. 15 for these mass ratios looks the same as Fig. 9, that has a PDO to (EG+PDO) mass ratio of 0.40, and the same as Fig. 12, that has a DEG to (EG+DEG) mass ratio of 0.40.
When the non-aqueous EG-based heat transfer fluid comprises both PDO and DEG, the useful PDO to (EG+PDO+DEG) mass ratio range would be about 0.025 to about 0.40 and the useful DEG to (EG+PDO+DEG) mass ratio range would also be about 0.025 to about 0.40. The useful range for the mass ratio of (PDO+DEG) to (EG+PDO+DEG) is about 0.05 to about 0.50.

The heat transfer fluid may also contain one or more corrosion inhibiting additives. The non-aqueous heat transfer fluid contains only a trace of water when formulated, i.e. less than 1.0% by weight. It is possible that, in use, additional amounts water may become present as an impurity. In general, the water content of the non-aqueous heat transfer fluid during use should not exceed about three percent, and less preferably, five percent.

Because the non-aqueous heat transfer fluid contains almost no water, the corrosion inhibitor must be soluble in at least one of the glycols in the heat transfer fluid. Corrosion inhibitor additives that may be used in the heat transfer fluid includes nitrates, such as sodium nitrate, molybdates, such as sodium molybdate, azole compounds, such as tolyltriazole (TT), hydrogenated tolyltriazole (THT), butylbenzotriazole (BBT), or mixtures thereof, and one or more organic acid corrosion inhibiting agents, such as 2-ethylhexanoic acid. Combinations of these corrosion inhibitors may also be used. Additionally, potassium or sodium hydroxide may be suitably added to raise the pH of the heat transfer fluid to a desired level. The corrosion inhibitor additives may be present in concentrations of about 0.05% to about 3% by weight.

There are various benchmarks that are important for non-aqueous heat transfer fluids used as engine coolants. The most important is an LTOL of -40°C, as the temperatures at all times on most of the world's surface never reach temperatures that cold. The heat transfer fluid with an LTOL of -40°C is comprised of EG and PDO, with a PDO to (EG+PDO) mass ratio of about 0.14. The heat transfer fluid is further comprised of at least one corrosion inhibitor selected from a nitrate, such as sodium nitrate, a molybdate, such as sodium molybdate, an azole, such as tolyltriazole (TT), hydrogenated tolyltriazole (THT), butylbenzotriazole (BBT), or mixtures thereof, a carboxylic acid, such as 2-ethylhexanoic acid, and a hydroxide, such as potassium hydroxide. The one or more corrosion inhibitors may be present in the following concentrations: nitrate: about 0.05% to about 3%, molybdate: about 0.05% to about 3%, azole: about 0.1% to about 3%, carboxyl acid: about 0.1% to about 3%, and hydroxide: about 0.1% to about 3%. This reference example exhibits a viscosity of 1950 mPa·s at -40°C, compared to 2540 mPa·s for a comparable PG/EG fluid having a -40°C LOTL.

A heat transfer fluid with an LTOL of -40°C is comprised of EG and DEG, with a DEG to (EG+DEG) mass ratio of about 0.22. The heat transfer fluid is further comprised of at least one corrosion inhibitor selected from a nitrate, such as sodium nitrate, a molybdate, such as sodium molybdate, an azole, such as tolyltriazole (TT), hydrogenated tolyltriazole (THT), butylbenzotriazole (BBT), or mixtures thereof, a carboxylic acid, such as 2-ethylhexanoic acid, and a hydroxide, such as potassium hydroxide. The one or more corrosion inhibitors may be present in the following concentrations: nitrate: about 0.05% to 3%, molybdate: about 0.05% to 3%, azole: about 0.1% to 3%, carboxyl acid: about 0.1% to 3%, and hydroxide: about 0.1% to 3%. This reference example exhibits a viscosity of 2135 mPa·s at-40°C, as compared to 2540 mPa·s for a comparable PG/EG fluid having a -40°C LOTL.

An example of the heat transfer fluid according to the invention with an LTOL of -40°C is comprised of EG, PDO. and DEG, with a mass PDO to (EG+PDO+DEG) ratio of about 0.06 and a mass DEG to (EG+PDO+DEG) ratio of about 0.10. The heat transfer fluid is further comprised of at least one corrosion inhibitor selected from a nitrate, such as sodium nitrate, a molybdate, such as sodium molybdate, an azole, such as tolyltriazole (TT), hydrogenated tolyltriazole (THT), butylbenzotriazole (BBT), or mixtures thereof, a carboxylic acid, such as 2-ethylhexanoic acid, and a hydroxide, such as potassium hydroxide. The one or more corrosion inhibitors may be present in the following concentrations: nitrate: about 0.05% to 3%, molybdate: about 0.05% to 3%, azole: about 0.1% to 3%, carboxyl acid: about 0.1% to 3%, and hydroxide: about 0.1% to 3%. This embodiment exhibits a viscosity of 2001 mPa·s at -40°C, as compared to 2540 mPa·s for a comparable PG/EG fluid having a -40°C LOTL.

Another benchmark that is important for non-aqueous heat transfer fluids used as engine coolants is an LTOL of -51.1°C (-60°F), as that temperature is colder than most Arctic environments. Reference examples of the heat transfer fluid for an LTOL of -51.1°C may be 1) comprised of EG and PDO, with a PDO to (EG+PDO) mass ratio of about 0.275, 2) comprised of EG and DEG, with a DEG to (EG+DEG) mass ratio of about 0.30. An inventive example is comprised of EG, PDO, and DEG with a PDO to (EG+PDO+DEG) mass ratio of about 0.12 and a DEG to (EG+PDO+DEG) mass ratio of about 0.155.

These examples for heat transfer fluids having an LTOL of -51.1°C are further comprised of at least one corrosion inhibitor selected from a nitrate, such as sodium nitrate, a molybdate, such as sodium molybdate, an azole, such as tolyltriazole (TT), hydrogenated tolyltriazole (THT), butylbenzotriazole (BBT), or mixtures thereof, a carboxylic acid, such as 2-ethylhexanoic acid, and a hydroxide, such as potassium hydroxide. The one or more corrosion inhibitors may be present in the following concentrations: nitrate: about 0.05% to 3%, molybdate: about 0.05% to 3%, azole: about 0.1% to 3%, carboxyl acid: about 0.1% to 3%, and hydroxide: about 0.1% to 3%.

Small percentages of other polyhydric alcohols, such as glycerol, tetraethylene glycol, triethylene glycol, PG, tripropylene glycol, and dipropylene glycol could be added to the heat transfer fluids described herein without much effect except that they would add to the viscosity, a negative feature.

The detailed description of specific embodiments of the invention is to be taken in an illustrative rather than a limiting sense.

## Claims

1. An ethylene glycol-based non-aqueous engine coolant for internal combustion engines comprising ethylene glycol (EG), 1,3 propanediol (PDO), and diethylene glycol (DEG), wherein the ratio of the mass of the PDO to the total mass of EG, PDO and DEG is 0.025 to 0.40, the ratio of the mass of the DEG to the total mass of EG, PDO and DEG is 0.025 to 0.40, the ratio of the total mass of PDO and DEG to the total mass of EG, PDO and DEG is 0.05 to 0.50 and the ratio of the mass of the EG to the total mass of EG, PDO and DEG is 0.50 to 0.95, and wherein the non-aqueous engine coolant contains less than 1.0% water by mass.

2. The ethylene glycol-based non-aqueous engine coolant according to claim 1, further comprising at least one corrosion inhibiting additive selected from the group consisting of a nitrate, a molybdate, an azole, an organic acid corrosion inhibitor, and a hydroxide.

3. The ethylene glycol-based non-aqueous engine coolant of claim 2, wherein the at least one corrosion inhibiting additive is selected from the group consisting of sodium nitrate in a concentration of 0.05% to 3%, sodium molybdate in a concentration of 0.05% to 3%, tolyltriazole (TT), hydrogenated tolyltriazole (THT), butylbenzotriazole (BBT), or a mixture thereof, in a concentration of 0.05% to 3%, 2-ethylhexanoic acid (2-EHA) in a concentration of 0.1% to 3%, and potassium hydroxide in a concentration of 0.1% to 3%.

4. A method for producing an ethylene glycol based non-aqueous engine coolant for internal combustion engines, comprising the step of combining ethylene glycol (EG) with 1,3-propanediol (PDO), and diethylene glycol (DEG), wherein the ratio of the mass of the PDO to the total mass of EG, PDO and DEG is 0.025 to 0.40, the ratio of the mass of the DEG to the total mass of EG, PDO and DEG is 0.025 to 0.40, the ratio of the total mass of PDO and DEG to the total mass of EG, PDO and DEG is 0.05 to 0.50 and the ratio of the mass of the EG to the total mass of EG, PDO and DEG is 0.50 to 0.95, and wherein the non-aqueous engine coolant contains less than 1.0% water by mass.

## Patentansprüche

1. Nichtwässriges Motorkühlmittel auf Ethylenglykolbasis für Verbrennungsmotoren, umfassend Ethylenglykol (EG), 1,3-Propandiol (PDO) und Diethylenglykol (DEG), wobei das Verhältnis der Masse von PDO zur Gesamtmasse von EG, PDO und DEG 0,025 bis 0,40 beträgt, das Verhältnis der Masse von DEG zur Gesamtmasse von EG, PDO und DEG 0,025 bis 0,40 beträgt, das Verhältnis der Gesamtmasse von PDO und DEG zur Gesamtmasse von EG, PDO und DEG 0,05 bis 0,50 beträgt und das Verhältnis der Masse von EG zur Gesamtmasse von EG, PDO und DEG 0,50 bis 0,95 beträgt, und wobei das nichtwässrige Motorkühlmittel weniger als 1,0 Massen-% Wasser enthält.

2. Nichtwässriges Motorkühlmittel auf Ethylenglykolbasis nach Anspruch 1, das ferner mindestens ein korrosionshemmendes Additiv umfasst, das aus der Gruppe ausgewählt ist, die aus einem Nitrat, einem Molybdat, einem Azol, einem organischen Säurekorrosionsinhibitor und einem Hydroxid besteht.

3. Nichtwässriges Motorkühlmittel auf Ethylenglykolbasis nach Anspruch 2, wobei das mindestens eine korrosionshemmende Additiv ausgewählt ist aus der Gruppe bestehend aus Natriumnitrat in einer Konzentration von 0,05 % bis 3 %, Natriummolybdat in einer Konzentration von 0,05 % bis 3 %, Tolyltriazol (TT), hydriertem Tolyltriazol (THT), Butylbenzotriazol (BBT) oder einer Mischung davon in einer Konzentration von 0,05 % bis 3 %, 2-Ethylhexansäure (2-EHA) in einer Konzentration von 0,1 % bis 3 % und Kaliumhydroxid in einer Konzentration von 0,1 % bis 3 %.

4. Verfahren zur Herstellung eines nichtwässrigen Motorkühlmittels auf Ethylenglykolbasis für Verbrennungsmotoren, umfassend den Schritt des Kombinierens von Ethylenglykol (EG) mit 1,3-Propandiol (PDO) und Diethylenglykol (DEG), wobei das Verhältnis der Masse von PDO zur Gesamtmasse von EG, PDO und DEG 0,025 bis 0,40 beträgt, das Verhältnis der Masse von DEG zur Gesamtmasse von EG, PDO und DEG 0,025 bis 0,40 beträgt, das Verhältnis der Gesamtmasse von PDO und DEG zur Gesamtmasse von EG, PDO und DEG 0,05 bis 0,50 beträgt, und das Verhältnis der Masse von EG zur Gesamtmasse von EG, PDO und DEG 0,50 bis 0,95 beträgt, und wobei das nichtwässrige Motorkühlmittel weniger als 1,0 Massen-% Wasser enthält.

## Revendications

1. Refroidisseur de moteur non aqueux à base d'éthylène glycol pour moteurs à combustion interne comprenant de l'éthylène glycol (EG), du 1,3 propanediol (PDO) et du diéthylène glycol (DEG), le rapport de la masse de PDO à la masse totale d'EG, de PDO et de DEG étant de 0,025 à 0,40,
le rapport de la masse du DEG à la masse totale d'EG, de PDO et de DEG étant de 0,025 à 0,40,
le rapport de la masse totale de PDO et de DEG à la masse totale d'EG, de PDO et de DEG étant e 0,05 à 0,50
et le rapport de la masse de l'EG à la masse totale d'EG, de PDO et de DEG étant de 0,50 à 0,95, et le refroidisseur de moteur non aqueux contenant moins de 1,0 % d'eau en masse.

2. Refroidisseur de moteur non aqueux à base d'éthylène glycol selon la revendication 1, comprenant en outre au moins un additif inhibiteur de corrosion choisi dans le groupe constitué par un nitrate, un molybdate, un azole, un inhibiteur de corrosion d'acide organique et un hydroxyde.

3. Refroidisseur de moteur non aqueux à base d'éthylène glycol selon la revendication 2, dans lequel au moins un additif inhibiteur de corrosion est choisi dans le groupe constitué par le nitrate de sodium à une concentration de 0,05 % à 3 %, le molybdate de sodium à une concentration de 0,05 % à 3 %, le tolyltriazole (TT), le tolyltriazole hydrogéné (THT), le butylbenzotriazole(BBT) ou un de leurs mélanges à une concentration de 0,05 % à 3 %, l'acide 2-éthylhexanoïque (2-EHA) à une concentration de 0,1 % à 3 % et l'hydroxyde de potassium à une concentration de 0,1 % à 3 %.

4. Procédé de production d'un refroidisseur de moteur non aqueux à base d'éthylène glycol pour moteurs à combustion interne, comprenant l'étape de combinaison de l'éthylène glycol (EG) avec le 1,3 propanediol (PDO) et le diéthylène glycol (DEG), le rapport de la masse du PDO à la masse totale d'EG, de PDO et de DEG étant de 0,025 à 0,40,
le rapport de la masse du DEG à la masse totale d'EG, de PDO et de DEG étant de 0,025 à 0,40,
le rapport de la masse totale de PDO et de DEG à la masse totale de l'EG, de PDO et de DEG étant de 0,05 à 0,50 et le rapport de la masse de l'EG à la masse totale de l'EG, du PDO et du DE étant de 0,50 à 0,95, et le refroidisseur de moteur non aqueux contenant moins de 1,0 % d'eau par masse.
